# EUROPEAN PATENT SPECIFICATION

(11) **EP 2 751 454 B1**
(45) Date of publication and mention of the grant of the patent: **10.05.2017**
(21) Application number: 12844789.3
(22) Date of filing: 19.10.2012
(51) Int. Cl.: F16K 47/08

(54) **A BUTTERFLY VALVE**
DROSSELVENTIL
RÉGULATEUR À PAPILLON

(30) Priority: 01.11.2011 SE 1151017
(43) Date of publication of application: 09.07.2014
(73) Proprietor: AB Somas Ventiler, 661 23 Säffle (SE)
(72) Inventor: NILSSON, Curt Ove, S-661 43 Säffle (SE)
(74) Representative: Johansson, Lars E.
(86) International application number: PCT/SE2012/051118
(87) International publication number: WO 2013/066245

(56) References cited:
- EP-A2- 0 101 323
- JP-B2- 3 341 653
- JP-U- H0 723 867
- JP-U- H0 723 867
- US-A- 4 691 894
- US-A- 4 770 393

## Description

### TECHNICAL FIELD

The present invention relates to a butterfly valve including a valve housing having a passage for a fluid medium flowing therethrough along a central axis of the passage, a rotary throttle disc mounted in the passage and having a stem for rotation of the disc to any position between an open position and a shut-off position, and a flow attenuating member mounted in the passage to cover a portion of a cross-section of the passage and having a plurality of identical conduits for reducing dynamic torque, noise level and vibrations caused by fluid flowing though the valve, the conduits form an angle with the central axis to make the portion of fluid medium that exits from the attenuating member have a direction that differs from the flow direction of the fluid medium that passes beside the conduits and the conduits direct the flow there through substantially toward the flow along the central axis.

### BACKGROUND ART

Butterfly valves are very well known and represent a well used design. The closing mechanism takes the form of a disc. The disc is positioned in the center of the pipe, and passing through the disc is a stem connected to an actuator on the outside of the valve. Rotation by the actuator turns the disc either parallel or perpendicular to the flow. A usual application of butterfly valves is to control the flow of water. As well as this, butterfly valves are used on firefighting apparatus and typically are used on larger pipe lines, such as front and rear suction ports and tank to pump lines. A butterfly valve is also a type of flow control device, used to make a fluid start or stop flowing through a section of pipe. To sum up, butterfly valves are useful both for clean and contaminated media; steam, gas, water or other fluids, in pulp and paper making industry, for example.

One type of butterfly valves is the triple offset or triple eccentric butterfly valve, which makes use of a metal seat and is therefore able to withstand a greater amount of heat. An example of a commercially successful triple eccentric butterfly valve is disclosed in US 4,770,393 (Hubertson). The high surface pressure between the disc and its seat make the valve useful for applications in the pulp and paper making industry, because the fibers are easily cut.

When the throttle disc is in a partly open position, there is a pressure drop over the valve, and this causes dynamic torque and formation of eddies on the leeward side of the disc with ensuing noise and vibrations. In US 4,691,894 (Pyötsiä et al.) there is a suggestion to reduce these disadvantages by providing attenuating members in the shape of perforated circular segments of plate and locating at least one upstream or downstream of the throttle disc and, if desired, also another downstream or upstream, respectively, of the throttle disc. These measures reduce the disadvantages to a certain extent, but a larger reduction is desirable.

In JP 3341653 is suggested how to reduce a foreign sound even in a resin wall having a low rigidity by turning, when a passage wall just down a net is made of a resin, the mesh of the net part to which the intake air passed through the side where a throttle valve is brought down on the upstream side to the direction of separating the intake air from the inner wall surface of the passage wall just down the net.

### SUMMARY OF THE INVENTION

The object of the present invention is to reduce the above disadvantages more than has been possible up to now, by a butterfly valve as defined in claim 1.

In a butterfly valve of the kind specified in the first paragraph above, this object is achieved in that in accordance with the present invention the conduits form an angle with the central axis to make the portion of fluid medium that exits from the conduits have a direction that differs from the flow direction of the fluid medium that passes beside the conduits, even though the conduits could be oriented to direct the flow, which exits from them, generally toward the inner wall of the passage, the conduits suitably direct the flow therethrough substantially toward the central axis.

The oblique conduits give larger energy loss than what would be obtained if they were parallel with the flow direction of fluid medium that passes beside the conduits. The result is a smaller remaining pressure drop over the edge of the throttle disc and, thus, less noise, since the pressure drop over the valve is taken in steps, so that when the fluid medium is a liquid, cavitation due to implosion of formed bubbles caused by local low static pressures is avoided. Naturally, the changed fluid flow around the throttle disc also reduces the dynamic torque.

To get an energy loss of desired size, the angle suitably is between 20° and 60°, preferably 30°.

The attenuating member extends across the passage, parallel to the throttle stem, and in a preferred embodiment it has a first portion that is shaped as a circular segment and located on one side of the throttle stem and encompasses all of the conduits.

For good control of the energy loss, the valve has an intended direction of flow therethrough, and the attenuating member is located downstream of the throttle stem and on the same side of the stem as a leading edge of the throttle disc.

For the same reason, attenuating member also has a second portion located mainly on the other side of the stem and causing no restriction of the fluid flow through the attenuating member.

Then, said attenuating member is a first attenuating member and a second attenuating member is be located upstream of the throttle stem and on the diametrically opposite side of the stem with respect to the leading edge of the throttle disc. Thereby, the energy loss and the location where it is created can be controlled still better.

Then, for manufacturing reasons and ease of service, the attenuating member suitably is basically disc-shaped, the valve housing suitably has an internal annular groove and in the groove a seal ring for the throttle disc, and the attenuating member suitably retains the seal ring in the annular groove.

Preferably, the second attenuating member is of the same basic shape as that of the first attenuating member. Thus, the second attenuating member preferably is shaped as a circular segment and is provided with a plurality of identical conduits and extends across the passage, parallel to the throttle stem, and further has the conduits form an angle with the central axis to make the portion of fluid medium that exits from the conduits have a direction that differs from the flow direction of the fluid medium that passes beside the second attenuating member. The conduits direct the flow therethrough substantially toward the flow along the central axis.

For good control of the energy loss, the conduits suitably are bores of a diameter between 2 and 14 mm, preferably between 6 and 8 mm, depending on the flow and the type of medium flowing through the valve.

For the same reason, the attenuating member has a thickness in the direction of flow through the valve of between 8 and 40 mm depending on the size of the valve.

### BRIEF DESCRIPTION OF THE DRAWINGS

In the following, the invention will be described in more detail with reference to preferred embodiments and the appended drawings.
- Fig. 1: is a perspective view of a preferred embodiment of a butterfly valve in accordance with the present invention and view from the inlet side of the valve.
- Fig. 2: is a perspective view of the valve of Fig. 1 but viewed from its outlet side.
- Fig. 3: is an exploded perspective view of the valve of Figs. 1 and 2.
- Fig. 4: is a perspective view of a disc-shaped attenuation member used on the inlet side of the valve of Figs. 1 and 2.
- Fig. 5: is a cross-sectional perspective view taken along line V-V in Fig. 4.
- Fig. 6: is a perspective view of a disc-shaped attenuation member used on the outlet side of the valve of Figs. 1 and 2.
- Fig. 7: is a cross-sectional perspective view taken along line VII-VII in Fig. 6.
- Fig. 8: is a cross-sectional perspective view taken along line VIII-VIII in Fig. 1.
- Fig. 9: is a principle cross-sectional view of a butterfly valve having a single attenuating member with oblique bores in accordance with the invention provided downstream of the throttle disc.
- Fig. 10: is a diagram showing the pressure drop over the valve of Fig. 9 with and without the attenuating member.
- Fig. 11: is a principle cross-sectional view of a butterfly valve having a two attenuating members with oblique bores in accordance with the invention provided upstream and downstream of the throttle disc.
- Fig. 12: is a diagram showing the pressure drop over the valve of Fig. 11 with and without the attenuating members.

### MODE(S) FOR CARRYING OUT THE INVENTION

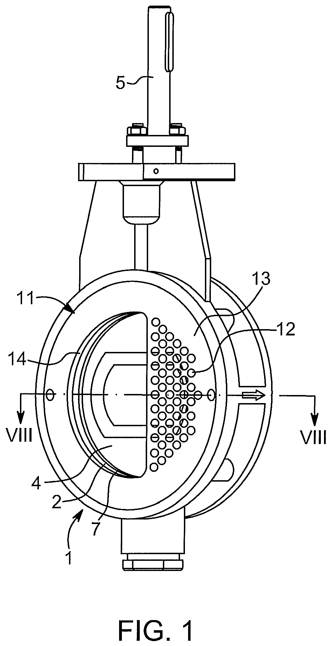

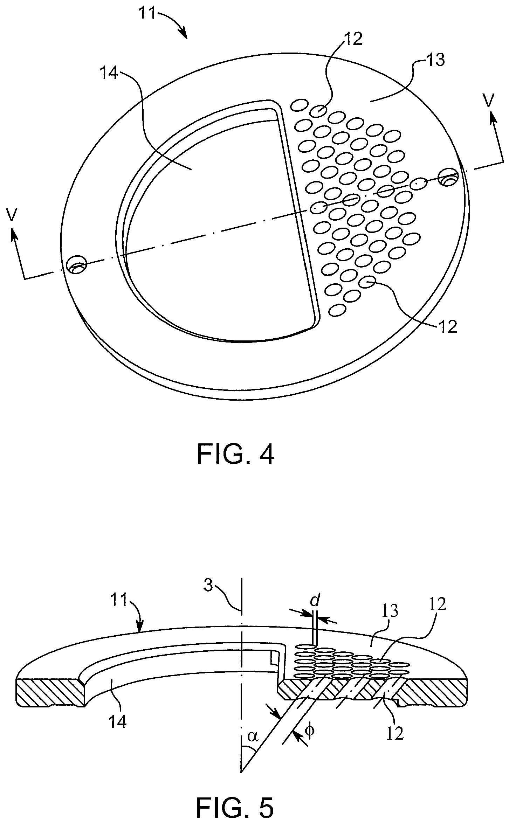

Fig. 1 shows a preferred embodiment of a triple eccentric butterfly valve according to the present invention. The shown butterfly valve is viewed from its inlet side and includes a valve housing 1 having a passage 2 for a fluid medium flowing therethrough along a central axis 3 (Figs. 5, 7 and 8) of the passage 1. A rotary throttle disc 4 is mounted in the passage 1 and has a throttle stem 5 for rotation of the throttle disc 4 to any position between an open position and a shut-off position. A flow attenuating member 11 is mounted in the passage 2 to cover a portion of a cross-section of the passage 2 and has a plurality of identical conduits 12 for reducing dynamic torque, noise level and vibrations caused by fluid flowing though the valve. The flow attenuating member 11 is best shown in Figs. 4 and 5, and in Figs. 4 and 5 the direction of the fluid flow is vertically downwards.

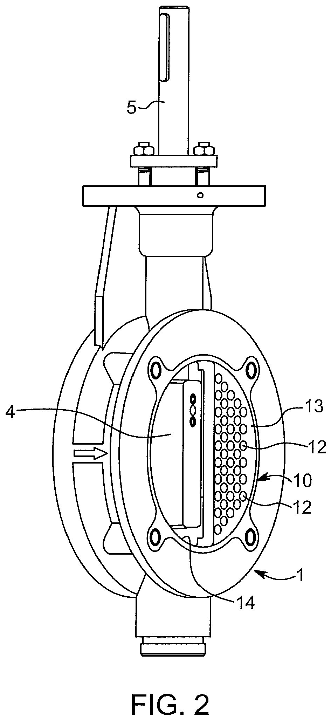

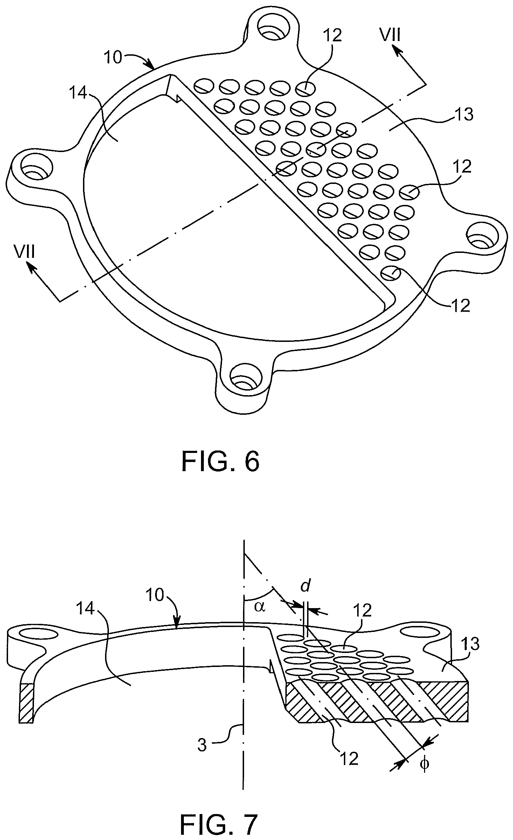

Fig. 2 shows the butterfly valve of Fig. 1 viewed from its outlet side. A flow attenuating member 10 basically similar to attenuating member 11 is mounted in the passage 2 to cover a portion of a cross-section of the passage 2 and has a plurality of identical conduits 12 for reducing dynamic torque, noise level and vibrations caused by fluid flowing through the valve. The flow attenuating member 10 is best shown in Figs. 6 and 7, and in Figs. 6 and 7 the direction of the fluid flow is vertically upwards.

To reduce dynamic torque and formation of eddies on the leeward side of the throttle disc with ensuing noise and vibrations, in accordance with the present invention and as best shown in Figs. 5 and 7, the conduits 12 form an angle α with an imaginary central plane extending along and encompassing the central axis 3 to make the portion of fluid medium that exits from the conduits 12 have a direction that differs from the flow direction of the fluid medium that passes beside the conduits 12.

The oblique conduits 12 give larger energy loss than what would be obtained if they were parallel with the flow direction of fluid medium that passes beside the conduits 12. The result is a smaller remaining pressure drop over the edge of the throttle disc 4 and, thus, less noise, since the pressure drop over the valve is taken in steps, so that when the fluid medium is a liquid, cavitation due to implosion of formed bubbles caused by local low static pressures is avoided. Naturally, the changed fluid flow around the throttle disc 4 also reduces the dynamic torque.

To get an energy loss of desired size, the angle α suitably is between 20° and 60°, preferably around 30°. Further, even though the conduits 12 could be oriented to direct the flow, which exits from them, generally toward the inner wall of the passage 2, the conduits 12 suitably direct the flow therethrough substantially toward the imaginary central plane extending along and encompassing the central axis 3. This also means that the valve has an intended direction of flow therethrough, as flow in the opposite direction would direct the flow, which exits the conduits, toward the inner wall of the passage 2.

The attenuating members 10, 11 extend across the passage 2 parallel to the throttle stem 5, and in the shown preferred embodiment they have a first portion 13 that is shaped as a circular segment and located on one side of the throttle stem 5 and encompasses all of the conduits 12.

For good control of the energy loss in case a single attenuating member is used, the attenuating member 10 is located downstream of the throttle stem 5 and on the same side of the throttle stem 5 as a leading edge of the throttle disc 4. Irrespective of whether a one or two attenuating members are used, the attenuating members 10, 11 for the same reason suitably also have a second portion 14 located mainly on the other side of the throttle stem 5 and causing no restriction of the fluid flow through the attenuating members 10, 11. Then, for manufacturing reasons and ease of service, the attenuating members 10, 11 suitably are basically disc-shaped as shown in the drawings, and the attenuating member 11 located at the inlet side of the valve is shown having two diametrically opposed bores for attaching it to the valve housing 1 by means of screws, while the other attenuating member 10 located at the outlet side is shown having four lugs with bores for attachment screws. If desired, one mounting bore in each of the attenuating members may be displaced from a symmetric location in order to make an incorrect mounting impossible.

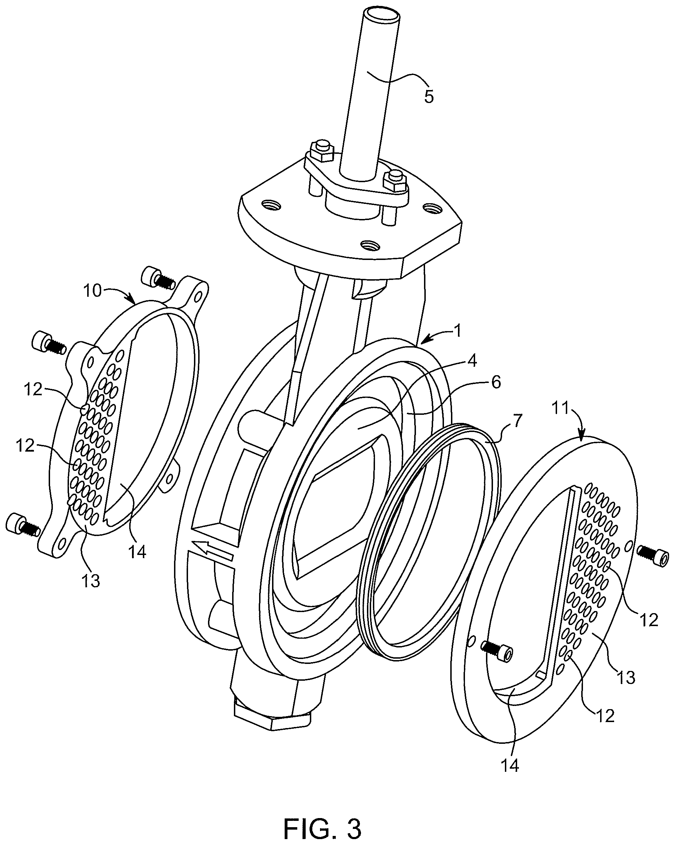

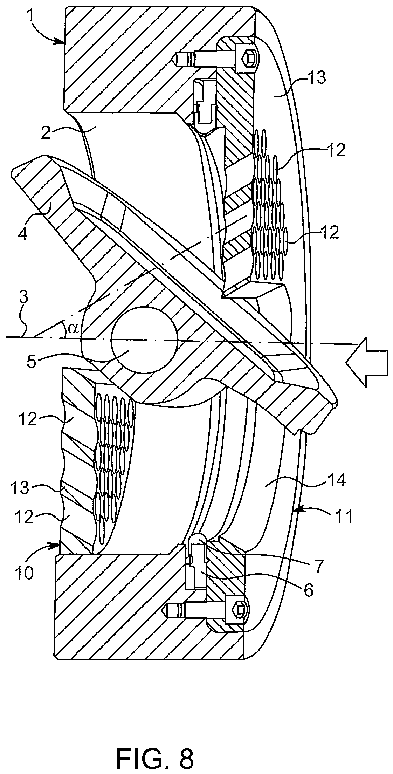

As is best shown in Figs. 3 and 8, the valve housing 1 suitably has an internal annular groove 6 and in the groove 6 a seal ring 7 for the throttle disc 4, and the second attenuating member 11 suitably retains the seal ring 7 in the annular groove 6. The design of the throttle disc 4 and the seal ring 7 and their cooperation preferably are as disclosed in US 4,770,393 (Hubertson). An arrow shows the direction of flow through the valve.

Even though the attenuating members 10, 11 suitably are basically disc-shaped, it would be possible, if desired, to use attenuating members of another shape, such as a polygonal shape or the shape of a circular segment, but the latter would require the provision of some other member for retaining the seal ring 7.

With reference to Figs. 5 and 7, for good control of the energy loss, the conduits suitably are bores 12 of a diameter Ø between 2 and 14 mm, preferably between 6 and 8 mm, depending on the flow and the type of medium flowing through the valve. For the same reason, the attenuating members 10, 11 have a thickness in the direction of flow through the valve of between 8 and 40 mm depending on the size of the valve. The minimum distance d between two bores as measured in the plane of each of the attenuating members 10, 11 is between 0.5 and 10 mm.

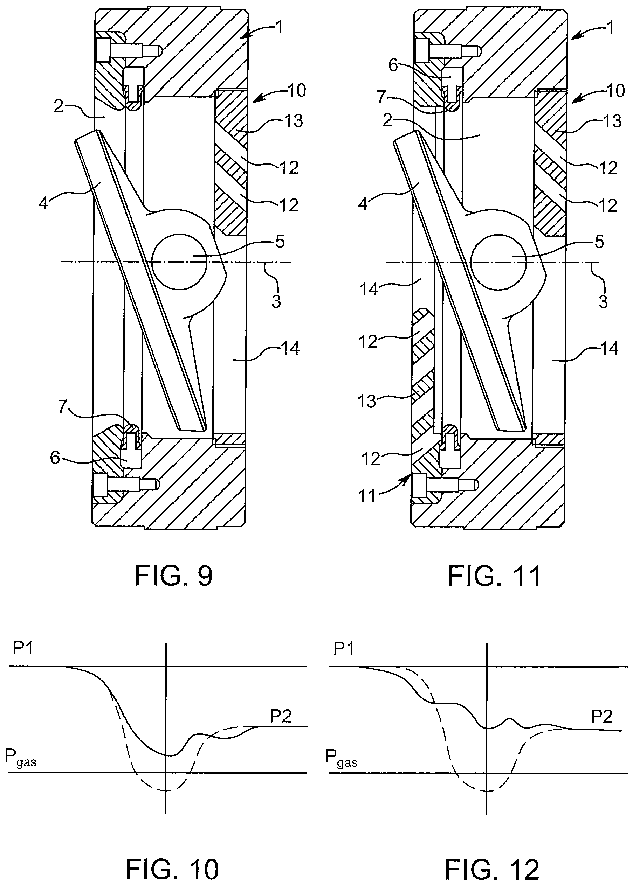

Fig. 9 is a principle cross-sectional view of a butterfly valve having a single attenuating member 10 with oblique bores in accordance with the invention provided downstream of the throttle disc 4. The associated diagram of Fig. 10 shows the pressure drop over the valve of Fig. 9 with and without the attenuating member 10. Without the attenuating member 10 with the oblique bores 12 in accordance with the invention, the static fluid pressure, which is on a high level P1 on arrival at the valve, falls to a low level at the narrowest section of the valve as shown by a dash line. If the fluid is a liquid, the static pressure may get so low that it falls below the pressure P_{gas} at which gas bubbles are formed in the liquid. Downstream of the narrowest section, some of the static pressure is recovered to level P2, and when the static pressure is sufficiently high, the bubbles collapse creating cavitation that causes erosion damage, vibration and disturbing noise. The attenuating member 10 with oblique bores 12 divides the pressure drop into steps as is shown by the solid line.

Fig. 11 is a principle cross-sectional view of a butterfly valve having two attenuating members 10 and 11 with oblique bores in accordance with the invention, one provided downstream and the other upstream of the throttle disc 4. The associated diagram of Fig. 12 shows the pressure drop over the valve of Fig. 11 with and without the attenuating members 10 and 11. Without the attenuating members 10 and 11 with the oblique bores 12 in accordance with the invention, the static fluid pressure, which is on a high level P1 on arrival at the valve, falls to a low level at the narrowest section of the valve as shown by a dash line. If the fluid is a liquid, the static pressure may get so low that it falls below the pressure P_{gas} at which gas bubbles are formed in the liquid. Downstream of the narrowest section, some of the static pressure is recovered to level P2, and when the static pressure is sufficiently high, the bubbles collapse creating cavitation that causes erosion damage, vibration and disturbing noise. The attenuating members 10 and 11 with oblique bores 12 divide the pressure drop into a plurality of steps as is shown by the solid line.

The invention is not restricted to the illustrative example described above and shown in the drawings but may be varied within the scope of the appended claims. As an example, if desired, it is of course possible to provide more than one attenuating member both downstream and upstream of the throttle disc.

### INDUSTRIAL APPLICABILITY

The butterfly valves of the invention are applicable for liquids, gases, and mixtures thereof and further also as control valves and stop valves in industries like pulp and papermaking, energy, oil and gas, marine, and also as exhaust valves for internal combustion engines and as surge valves in pneumatic flow control applications.

## Claims

1. A butterfly valve including a valve housing (1) having a passage (2) for a fluid medium flowing therethrough along a central axis (3) of the passage (2), a rotary throttle disc (4) mounted in the passage (2) and having a throttle stem (5) for rotation of the disc (4) to any position between an open position and a shut-off position, and a flow attenuating member (10) mounted in the passage (2) to cover a portion of a cross-section of the passage (2) and having a plurality of identical conduits (12) for reducing dynamic torque, noise level and vibrations caused by fluid flowing though the valve, wherein the conduits (12) form an angle (α) with the central axis (3) to make the portion of fluid medium that exits from the attenuating member (10) have a direction that differs from the flow direction of the fluid medium that passes beside the conduits (12), wherein the conduits direct the flow there through substantially toward the flow along the central axis (3), and wherein the attenuating member (10) extends across the passage (2), parallel to the throttle stem (5), and has a first portion (13) shaped as a circular segment and located on one side of the throttle stem (5) and encompassing all of the conduits (12), **characterized in that** said attenuating member (10) is a first attenuating member and a second attenuating member (11) is located upstream of the throttle stem (5) and on the diametrically opposite side of the stem (5) with respect to the leading edge of the throttle disc (4).

2. A butterfly valve as claimed in claim 1, **wherein** the angle (α) is between 20° and 60°.

3. A butterfly valve as claimed in claim 2, **wherein** the angle (α) is 30°.

4. A butterfly valve as claimed in claim 1, **wherein** the valve has an intended direction of flow therethrough, and wherein the first attenuating member (10) is located downstream of the throttle stem (5) and on the same side of the throttle stem (5) as a leading edge of the throttle disc (4).

5. A butterfly valve as claimed in claim 4, **wherein** the first attenuating member (10) also has a second portion (14) located mainly on the other side of the throttle stem (5) and causing no restriction of the fluid flow through first attenuating member (10).

6. A butterfly valve as claimed in claim 5, **wherein** the attenuating members (10) are basically disc-shaped.

7. A butterfly valve as claimed in claim 1, **wherein** the second attenuating member (11) is shaped as a circular segment and is provided with a plurality of identical conduits (12) and extends across the passage (2), parallel to the throttle stem (5), and further has the conduits (12) form an angle (α) with the central axis (3) to make the portion of fluid medium that exits from the conduits (12) have a direction that differs from the flow direction of the fluid medium that passes beside the conduits (12).

8. A butterfly valve as claimed in claim 6 - 7, **wherein** the valve housing (1) has an internal annular groove (6) and in the groove a seal ring (7) for the throttle disc (4), the second attenuating member (11) retaining the seal ring (7) in the annular groove (6)

9. A butterfly valve as claimed in any one of claims 1 - 8, **wherein** the conduits are bores (12) of a diameter between 2 and 14 mm.

10. A butterfly valve as claimed in claim 9, **wherein** the diameter is between 6 and 8 mm.

11. A butterfly valve as claimed in any of claims 1 - 10, **wherein** the attenuating members (10, 11) have a thickness in the direction of flow through the valve of between 8 and 40 mm.

## Patentansprüche

1. Schmetterlingsventil beinhaltend ein Ventilgehäuse (1) mit einem Durchgang (2) für ein fluides Medium, das dort entlang einer zentralen Achse (3) des Durchgangs (2) hindurch fließt, einer drehbaren Drosselscheibe (4), die in dem Durchgang (2) montiert ist und zur Drehung der Scheibe (4) in jede Stellung zwischen einer Offenstellung und einer Absperrstellung einen Drosselschaft (5) aufweist, und einem Flussdämpfungselement (10), das in dem Durchgang (2) montiert ist, um einen Teil eines Querschnitts des Durchgangs (2) abzudecken, und das mehrere gleichartige Kanäle (12) aufweist, zum Reduzieren von dynamischem Drehmoment, Geräuschpegel und Vibrationen, die durch ein Fluid verursacht werden, das durch das Ventil fließt, wobei
die Kanäle (12) einen Winkel (α) mit der zentralen Achse (3) bilden, um einen Teil an fluidem Medium, der aus dem Dämpfungselement (10) austritt, zu veranlassen, eine Richtung aufzuweisen, die sich von der Flussrichtung des fluiden Mediums unterscheidet, das neben den Kanälen (12) vorbeiströmt, wobei
die Kanäle den Fluss dort hindurch im Wesentlichen auf den Fluss entlang der zentralen Achse (3) richten, und wobei sich das Dämpfungselement (10) über den Durchgang (2), parallel zu dem Drosselschaft (5) erstreckt, und einen ersten Teil (13) aufweist, der als ein Kreissegment geformt ist und auf einer Seite des Drosselschafts (5) gelegen ist und alle Kanäle (12) umgibt,
**dadurch gekennzeichnet, dass**
das Dämpfungselement (10) ein erstes Dämpfungselement ist und ein zweites Dämpfungselement (11) stromaufwärts von dem Drosselschaft (5) und auf der diametral gegenüberliegenden Seite des Schafts (5) in Bezug auf die Vorderkante der Drosselscheibe (4) gelegen ist.

2. Schmetterlingsventil nach Anspruch 1, wobei der Winkel (α) zwischen 20° und 60° beträgt.

3. Schmetterlingsventil nach Anspruch 2, wobei der Winkel (α) 30° beträgt.

4. Schmetterlingsventil nach Anspruch 1, wobei das Ventil eine bestimmungsgemäße Flussrichtung dort hindurch aufweist, und wobei das erste Dämpfungselement (10) stromabwärts von dem Drosselschaft (5) und auf der gleichen Seite des Drosselschafts (5) wie eine Vorderkante der Drosselscheibe (4) gelegen ist.

5. Schmetterlingsventil nach Anspruch 4, wobei das erste Dämpfungselement (10) auch einen zweiten Teil (14) aufweist, der hauptsächlich auf der anderen Seite des Drosselschafts (5) gelegen ist und keine Einschränkung des Fluidflusses durch das erste Dämpfungselement (10) verursacht.

6. Schmetterlingsventil nach Anspruch 5, wobei die Dämpfungselemente (10) grundsätzlich scheibenförmig sind.

7. Schmetterlingsventil nach Anspruch 1, wobei das zweite Dämpfungselement (11) als ein Kreissegment geformt ist und mit mehreren gleichartigen Kanälen (12) versehen ist und sich über den Durchgang (2), parallel zu dem Drosselschaft (5) erstreckt, und wobei weiterhin die Kanäle (12) einen Winkel (α) mit der zentralen Achse (3) bilden, um einen Teil an fluidem Medium, der aus den Kanälen (12) austritt, zu veranlassen, eine Richtung aufzuweisen, die sich von der Flussrichtung des fluiden Mediums unterscheidet, das neben den Kanälen (12) vorbeiströmt.

8. Schmetterlingsventil nach Anspruch 6-7, wobei das Ventilgehäuse (1) eine innere ringförmige Rille (6) und in der Rille einen Dichtring (7) für die Drosselscheibe (4) aufweist, wobei das zweite Dämpfungselement (11) den Dichtring (7) in der ringförmigen Rille (6) festhält.

9. Schmetterlingsventil nach einem der Ansprüche 1-8, wobei die Kanäle Bohrungen (12) mit einem Durchmesser zwischen 2 und 14 mm sind.

10. Schmetterlingsventil nach Anspruch 9, wobei der Durchmesser zwischen 6 und 8 mm beträgt.

11. Schmetterlingsventil nach einem der Ansprüche 1-10, wobei die Dämpfungselemente (10, 11) in der Flussrichtung durch das Ventil eine Dicke von zwischen 8 und 40 mm aufweisen.

## Revendications

1. Une vanne à papillon, comprenant un boîtier de vanne (1) ayant un passage (2) pour un fluide s'écoulant à travers lui le long d'un axe central (3) du passage (2), un papillon rotatif (4) monté dans le passage (2) et ayant une tige (5) de papillon pour la rotation du papillon (4) en une position quelconque entre une position d'ouverture et une position d'obturation, et un élément (10) d'atténuation d'écoulement monté dans le passage (2) pour recouvrir une partie d'une section transversale du passage (2) et ayant une pluralité de conduits (12) identiques pour réduire le couple dynamique, le niveau de bruit et les vibrations provoqués par le fluide s'écoulant dans la vanne,
les conduits (12) formant un angle (α) avec l'axe central (3) pour faire en sorte que la portion de fluide qui sort de l'organe d'atténuation (10) ait une direction qui diffère de la direction d'écoulement du fluide qui passe à côté des conduits (12),
les conduits dirigent l'écoulement se produisant à travers eux sensiblement vers l'écoulement se produisant le long de l'axe central (3), et
l'organe d'atténuation (10) s'étend à travers le passage (2), parallèlement à la tige (5) de papillon, et présente une première partie (13) en forme de segment circulaire et située sur un côté de la tige (5) de papillon et englobant l'ensemble des conduits (12),
**caractérisé en ce que** ledit organe d'atténuation (10) est un premier organe d'atténuation et **en ce qu'**un deuxième organe d'atténuation (11) est situé en amont de la tige (5) de papillon et sur le côté de la tige (5) diamétralement opposé par rapport au bord d'attaque du papillon (4).

2. Une vanne à papillon selon la revendication 1, dans laquelle l'angle (α) est compris entre 20° et 60°.

3. Une vanne à papillon selon la revendication 2, dans laquelle l'angle (α) est de 30°.

4. Une vanne à papillon selon la revendication 1, dans laquelle la vanne a une direction d'écoulement déterminée à travers elle, et dans laquelle le premier organe d'atténuation (10) est situé en aval de la tige (5) de papillon et du même côté de la tige (5) de papillon, en tant que bord d'attaque du papillon (4).

5. Une vanne à papillon selon la revendication 4, dans laquelle le premier organe d'atténuation (10) comporte également une deuxième partie (14) située principalement sur l'autre côté de la tige (5) de papillon et ne causant aucune restriction de l'écoulement de fluide à travers le premier organe d'atténuation (10).

6. Une vanne à papillon selon la revendication 5, dans laquelle les organes d'atténuation (10) sont sensiblement en forme de disque.

7. Une vanne à papillon selon la revendication 1, dans laquelle le deuxième organe d'atténuation (11) est conformé en segment circulaire et est pourvu d'une pluralité de conduits (12) identiques et s'étend à travers le passage (2), parallèlement à la tige (5) de papillon, et les conduits (12) forment en outre un angle (α) avec l'axe central (3) pour faire en sorte que la portion de fluide qui sort des conduits (12) présente une direction qui diffère de la direction d'écoulement du fluide qui passe à côté des conduits (12).

8. Une vanne à papillon selon l'une des revendications 6 à 7, dans laquelle le boîtier de vanne (1) comporte une rainure annulaire interne (6) et, dans la rainure, une bague d'étanchéité (7) pour le papillon (4), le deuxième organe d'atténuation (11) retenant la bague d'étanchéité (7) dans la rainure annulaire (6).

9. Une vanne à papillon selon l'une quelconque des revendications 1 à 8, dans laquelle les conduits sont des alésages (12) d'un diamètre compris entre 2 et 14mm.

10. Une vanne à papillon selon la revendication 9, dans laquelle le diamètre est compris entre 6 et 8mm.

11. Une vanne à papillon selon l'une quelconque des revendications 1 à 10, dans laquelle les organes d'atténuation (10, 11) ont, dans la direction d'écoulement à travers la vanne, une épaisseur comprise entre 8 et 40mm.
